# EUROPÄISCHE PATENTANMELDUNG

(11) **EP 0 541 119 A1**
(43) Veröffentlichungstag der Anmeldung: **12.05.1993**
(21) Anmeldenummer: 92119079.9
(22) Anmeldetag: 06.11.1992
(51) Int. Cl.: H04Q 11/04, H04M 11/00

(54) **Steuervorrichtung für die Datenübermittlung zwischen einem digitalen Fernsprechnetz und einem prozessorbestückten Endgerät**

(30) Priorität: 06.11.1991 DE 4136548
(71) Anmelder: Sedlbauer Aktiengesellschaft, D-94481 Grafenau (DE)
(72) Erfinder: Klee, Volkmar, Dr., W-8352 Grafenau (DE); Steiner, Hans, W-8352 Grafenau (DE)
(74) Vertreter: Preissner, Nicolaus, Dipl.-Ing.

(57) **Zusammenfassung**

Die Steuervorrichtung ist als Adapter (1) an eine Druckerschnittstelle (7) eines Endgeräts anschließbar, wobei auf dem Adapter (1) eine Netzschnittstellenanpassung (2) und ein HDLC-Baustein (3) für die Abwicklung der für die Datenübertragung notwendigen Steuer- und Datenkanalprotokolle angeordnet sind und der Adapter (1) in der Weise ausgebildet ist, daß seine Steuerung durch den Endgeräteprozessor erfolgt.

Damit können insbesondere PC's ohne Eingriff und ohne Nachrüstung an ein digitales Fernsprechnetz angeschlossen werden, z.B. auch für eine Nutzung als automatischer Anrufbeantworter.

## Beschreibung

Die Erfindung bezieht sich auf eine Steuervorrichtung für die Datenübermittlung zwischen einem digitale Daten übertragenden Fernsprechnetz und einem mindestens einen Prozessor und digitale Speicherelemente aufweisenden Endgerät, insbesondere einem Personalcomputer.

Für die Kopplung von Personalcomputern oder rechnergesteuerten Arbeitsplätzen mit einem digitale Daten übertragenden Fernsprechnetz sind Einsteckkarten und Terminaladaptoren seit einiger Zeit bekannt.

Terminaladaptoren ermöglichen herkömmlichen Endgeräten den Zugang zu ISDN, sind aber nicht für Mehrdienst-Endgeräte konzipiert.

Der Einsatz von Steckkarten läßt kaum Wünsche in bezug auf die Funktionalität offen. Bekannt ist beispielsweise aus dem DE-GM 90 06 238 eine Einsteckkarte für die Datenübermittlung zwischen einem digitale Daten übertragenden Fernsprechnetz und einem mindestens einen Prozessor und digitale Speicherelemente aufweisenden Endgerät, wobei auf der Einsteckkarte eine Netzschnittstellenanpassung und eine Prozessorschnittstelle angeordnet sind und zur Abwicklung der für die Datenübertragung notwendigen Steuer- und Datenkanalprotokolle zum einen auf der Einsteckkarte angeordnete HDLC-Bausteine und zum anderen der Endgeräte-Prozessor vorgesehen sind. Solche Einsteckkarten sind für Telematikdienste wie Bildschirmtext, Telefax, Teletext und Filetransfer konzipiert.

Die Installation dieser Karten in einem Computer wirft jedoch Probleme auf: Es muß ein geeigneter freier Einsteckplatz vorhanden sein. Das Endgerät muß für den Einbau geöffnet werden; durch diesen können u.a. Schwierigkeiten bei Anlagen mit Garantieanspruch auftreten. Die Einsteckkarten müssen entsprechend der Ausstattung des Computers konfiguriert werden, wozu der Anwender oftmals nicht in der Lage ist. Der Aufbau der Einsteckkarten ist von der Rechnergattung abhängig; er wird von der Charakteristik des jeweiligen Rechnerbussystems bestimmt. Die Produkte aus der Gruppe der Laptops und der elektronischen Notebooks verfügen oft überhaupt nicht über Einsteckplätze und können dementsprechend nicht mit Einsteckkarten ausgerüstet werden.

Aufgabe der vorliegenden Erfindung ist es daher, für Mehrzweck-Endgeräte eine gattungsgemäße Steuervorrichtung zu schaffen, die die vorgenannten Nachrüstprobleme von Einsteckkarten vermeidet.

Diese Aufgabe wird erfindungsgemäß dadurch gelöst, daß die Steuervorrichtung als Adapter an eine Druckerschnittstelle eines Endgeräts anschließbar ist, wobei auf dem Adapter eine Netzschnittstellenanpassung und ein HDLC-Baustein für die Abwicklung der für die Datenübertragung notwendigen Steuer- und Datenkanalprotokolle angeordnet sind und der Adapter in der Weise ausgebildet ist, daß seine Steuerung durch den Endgeräteprozessor erfolgt.

Durch diese Ausgestaltung erfordert die Steuervorrichtung vorteilhaft keinerlei Einsteckkarte und damit keinen Einsteckplatz im Endgerät, sondern kann in Form eines Adapters am Druckerport des Endgeräts angeschlossen werden.

Auch werden weitere Einsatzmöglichkeiten eröffnet. Etwa kann der Adapter so ausgebildet werden, daß er aus dem Fernsprechnetz digital übermittelte Sprachdaten in Speicherelemente des Endgeräts leitet oder aus den Speicherelementen des Endgeräts digital gespeicherte Sprachdaten in das Fernsprechnetz leitet. Durch diese Maßnahme kann mit der Steuervorrichtung vorteilhafterweise zusätzlich die Speicherung, Wiedergabe und Übertragung von Sprache realisiert werden. Insbesondere kann damit besonders vorteilhaft etwa ein PC auch als automatischer Anrufbeantworter (mit oder ohne Fernabfrage) genutzt werden.

Hierzu kann der Adapter vorteilhaft einen Sende- und Empfangsbaustein zum Steuern und Überwachen eines Fernsprechapparates aufweisen.

Es ist günstig, wenn der Adapter ferner einen Druckerausgang aufweist. Dadurch kann trotz Belegung des Druckerports am Endgerät ein Drucker angeschlossen werden.

Die elektrische Energieversorgung des Adapters kann mit Hilfe eines Gleichspannungswandlers besonders vorteilhaft unmittelbar aus dem Fernsprechnetz erfolgen.

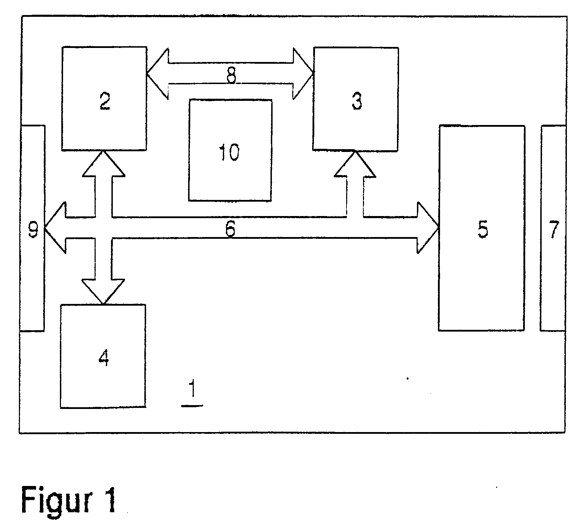

Nachfolgend wird die Erfindung anhand eines in der Zeichnung dargestellten Ausführungsbeispiels näher erläutert. Darin zeigt die einzige
- Fig.1: eine schematische Darstellung eines Adapters für eine erfindungsgemäße Steuervorrichtung.

Das Blockschaltbild gemäß Fig.1 veranschaulicht auf einem Adapter 1 als ersten Funktionsbaustein eine Netzschnittstellenanpassung 2 (z.B. Sₒ-Schnittstelle), die einen die Steuerungsprotokolle unterstützenden HDLC-Controller für einen Steuerdaten-Kanal (D-Kanal) beinhaltet. Ferner trägt der Adapter 1 einen zweikanaligen HDLC-Baustein 3 für zwei Anwendungsdaten-Kanäle (B-Kanäle), wobei eine Datenübertragung über einen oder beide Kanäle möglich ist. Vorzugsweise ist auch ein Steuerdatenkanal mit einer Übertragungskapazität von 16 kbit/s vorgesehen, dessen Bedienung durch den HDLC-Controller in der Netzschnittstellenanpassung 2 auf dem Adapter 1 unterstützt wird. Ein serieller Sende- und EmpfangsbauStein 4 kann für das optionale Steuern und Überwachen eines Fernsprechapparats mit standardisierter X-Schnittstelle auf dem Adapter 1 angeordnet sein.

Eine Multiplex-/Demultiplexeinrichtung 5 und ein Daten- und Adreßbus 6 dienen zur Datenübertragung von der Netzschnittstellenanpassung 2, vom zweikanaligen HDLC-Baustein 3 sowie vom seriellen Sende- und Empfangsbaustein 4 zu einer parallelen Druckerschnittstelle 7, die mit dem nicht dargestellten Prozessor eines Endgerätes, vorzugsweise eines Personalcomputers, verbunden ist. Die Übertragung von Daten zwischen der Netzschnittstellenanpassung 2 und dem HDLC-Baustein 3 erfolgt über einen Datenbus 8.

Ein paralleler Druckerausgang 9 gestattet den Anschluß eines Druckers, der neben der ISDN-Anwendung genutzt werden kann.

Die Stromversorgung des Adapters 1 wird vorzugsweise aus der Sₒ-Schnittstelle mittels eines Gleichspannungswandlers (DC-DC-Wandlers) 10 realisiert, so daß ein eigenes Netzgerät für den Adapter 1 nicht erforderlich wird.

Digitalisierte Sprachdaten können von der Netzschnittstellenanpassung 2 über den Datenbus 8 zum Druckerport 7 geleitet werden. Von dort gelangen sie zu dem nicht gezeichneten Prozessor des Endgerätes. Dieser ermöglicht die Speicherung der Sprachdaten in den RAM-Bausteinen des Endgerätes und eine anschließende Archivierung in (nicht-flüchtigen) Dateien.

Bei Sprachwiedergabe gehen die Daten den entgegengesetzten Weg. Die digitalisierten Sprachdaten gelangen aus einer Datei kommend über den nicht gezeichneten Endgeräte-Prozessor zur Netzschnittstellenanpassung 2 und ins digitale Fernsprechnetz.

Es sei hervorgehoben, daß die Sprachdaten auf dem Weg von der Netzschnittstellenanpassung 2 zu den Speicherplätzen des Endgerätes und zurück keine A/D- oder D/A-Wandlung zu erfahren brauchen.

Die Nutzung des Endgeräte-Prozessors für die Abwicklung der Datenübertragung erlaubt es, den Adapter 1 als passives Element, also ohne eigenen Prozessor, auszubilden. Daraus ergibt sich zum einen ein geringerer Platzbedarf und zum anderen ein schnellerer Datenaustausch, als wenn zwei Prozessoren involviert wären.

Darüberhinaus wird eine aufwendigere Lösung vermieden, da zur Erstellung der Protokollsoftware grundsätzlich mit Hilfsmitteln wie Kreuzcompilern oder ähnlichem gearbeitet werden muß.

Um Speicherplatz zu sparen, kann vorgesehen werden, die Sprachdaten vor ihrer Speicherung einem Kompressionsverfahren zu unterwerfen, wobei diese Daten vor ihrer Wiedergabe dekomprimiert werden.

### Bezugszeichenliste

- 1: Adapter
- 2: Netzschnittstellenanpassung
- 3: HDLC-Baustein (2 Kanäle)
- 4: Sende- und Empfangsbaustein
- 5: Multiplex-/Demultiplexeinrichtung
- 6: Daten- und Adreßbus
- 7: Druckerschnittstelle
- 8: Datenbus
- 9: Druckerausgang
- 10: Gleichspannungswandler

## Patentansprüche

1. Steuervorrichtung für die Datenübermittlung zwischen einem digitale Daten übertragenden Fernsprechnetz und einem mindestens einen Prozessor und digitale Speicherelemente aufweisenden Endgerät, **dadurch gekennzeichnet,** daß die Steuervorrichtung als Adapter (1) an eine Druckerschnittstelle eines Endgeräts anschließbar ist, wobei auf dem Adapter (1) eine Netzschnittstellenanpassung (2) und ein HDLC-Baustein (3) für die Abwicklung der für die Datenübertragung notwendigen Steuer- und Datenkanalprotokolle angeordnet sind und der Adapter (1) in der Weise ausgebildet ist, daß seine Steuerung durch den Endgeräteprozessor erfolgt.

2. Steuervorrichtung nach Anspruch 1, **dadurch gekennzeichnet,** daß der Adapter (1) ausgebildet ist, aus dem Fernsprechnetz digital übermittelte Sprachdaten in Speicherelemente des Endgeräts zu leiten oder aus den Speicherelementen des Endgeräts digital gespeicherte Sprachdaten in das Fernsprechnetz zu leiten.

3. Steuervorrichtung nach Anspruch 2, **dadurch gekennzeichnet,** daß die digitalisierten Sprachdaten in einer Datei auf einem nicht-flüchtigen Datenträger abspeicherbar sind.

4. Steuervorrichtung nach Anspruch 2 oder 3, **dadurch gekennzeichnet,** daß die Sprachdaten vor der Speicherung einem Kompressionsverfahren unterwerfbar sind.

5. Steuervorrichtung nach einem der Ansprüche 1 bis 4, **dadurch gekennzeichnet,** daß der Adapter (1) einen zweikanaligen HDLC-Baustein (3) aufweist, mittels dessen eine Datenübertragung über einen oder zwei Anwendungsdaten-Kanäle möglich ist.

6. Steuervorrichtung nach einem der Ansprüche 1 bis 5, **dadurch gekennzeichnet,** daß ein Steuerdatenkanal eine Übertragungskapazität von 16 kbit/s aufweist und seine Bedienung durch den HDLC-Controller in der Netzschnittstellenanpassung (2) auf dem Adapter (1) unterstützt wird.

7. Steuervorrichtung nach einem der Ansprüche 1 bis 6, **dadurch gekennzeichnet**, daß der Adapter (1) einen seriellen Sende- und Empfangsbaustein (4) zum Steuern und Überwachen eines Fernsprechapparates aufweist.

8. Steuervorrichtung nach einem der Ansprüche 1 bis 7, **dadurch gekennzeichnet,** daß der Adapter (1) einen Druckerausgang (9) zum Anschluß eines Druckers aufweist.

9. Steuervorrichtung nach einem der Ansprüche 1 bis 8, **dadurch gekennzeichnet,** daß der Adapter (1) mit Hilfe eines Gleichspannungswandlers (10) aus dem digitalen Fernsprechnetz mit Strom versorgbar ist.
